Europäisches Patentamt

European Patent Office

Office européen des brevets

(19)

(11) Publication number: **0 323 630**
**A2**

(12) **EUROPEAN PATENT APPLICATION**

(21) Application number: **88121744.2**

(51) Int. Cl.⁴: **G06K 7/10**

(22) Date of filing: **28.12.88**

(30) Priority: **08.01.88 IT 330188**

(43) Date of publication of application:
**12.07.89 Bulletin 89/28**

(84) Designated Contracting States:
**AT BE CH DE ES FR GB GR LI LU NL SE**

(71) Applicant: **DATALOGIC S.P.A.**
**Via Candini 2**
**I-40012 Lippo di Calderara di Reno**
**(Bologna)(IT)**

(72) Inventor: **Stanzani, Giuseppe**
**Via Cipriani 17**
**I-40131 Bologna(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) Optical device for correcting printing imperfections in reading bar codes.

(57) An optical device for correcting printing imperfections in reading bar codes by means of a linear image sensor. The device comprises a small bar (70) arranged on the sensor, its face fronting said sensor being planar and glossy, its opposite face being convex and glossy, said bar being made of translucent material such as glass or plastics.

Fig. 5

EP 0 323 630 A2

# OPTICAL DEVICE FOR CORRECTING PRINTING IMPERFECTIONS IN READING BAR CODES

The present invention relates to an optical device for correcting printing imperfections in reading bar codes by means of systems based on CCD (Charged Couple Device) linear image sensors.

As is known, a bar code is composed of a series of parallel bars of equal length and separated by interspaces. The bars and the interspaces may have different widths, which are usually multiples of a basis width.

In these bar codes the coding is given by the particular succession of bars and interspaces, the width whereof is diversified according to a preset criterion.

Reading devices using a laser beam or a CCD (Charged Couple Device) linear image sensor are known for decoding these bar codes. In particular, a CCD linear image sensor is constituted by an integrated circuit having a light-sensitive surface protected by a glass plate. The light-sensitive surface is formed by a large number of rectangular or square light-sensitive elements of extremely small size, so that in practice the resulting light-sensitive surface is a very thin line.

Various types of image sensors are currently commercially available and differ both in the number of photo-elements (2048 and over) and in the geometric dimensions of said photo-elements. In any case it can be assumed that the light-sensitive line is generally between 9 and 20 thousandths of a millimeter in width, its length being variable between 12 and 30 millimetres.

A characteristic and function of linear image sensors is to provide a serial electric signal representing the higher or lower light intensity striking each individual photo-element constituting the light-sensitive line. On the basis of this principle, bar-code reading devices have been developed in which the image of the code is projected by means of an optical system onto the sensitive surface (line) of a linear image sensor so that the sensitive line crosses the bars of the code orthogonally. Since the optical system reduces the image so that the entire code is crossed by the sensitive line, it is possible to obtain an electric signal which represents the width of the bars and of the related interspaces and therefore obtain the data contained in the codes at issue by means of appropriate processing and decoding.

Reading devices based on linear sensors exist both for manual use and for fixed installations.

According to the dimensions of the code to be read and on the reading distance, optical lenses are used with focal lengths which reduce the dimension of the codes to a size compatible with the length of the sensitive line. Reduction ratios generally vary between 2:1 and 20:1.

A disadvantage shared by all currently commercially available bar code reading device is that they measure the bars and interspaces along a very narrow band of the code. Thus, with the above mentioned reduction values, assuming the sensitive surface of the linear sensor to be 0.013 mm wide, the reading band is between 0.026 and 0.26 mm wide.

The length of the bars constituting a code is generally comprised between 5 mm for the smaller codes and 20 mm and over for the larger codes. However, due to various reasons, such as printing imperfections, the bars are sometimes incorrectly read.

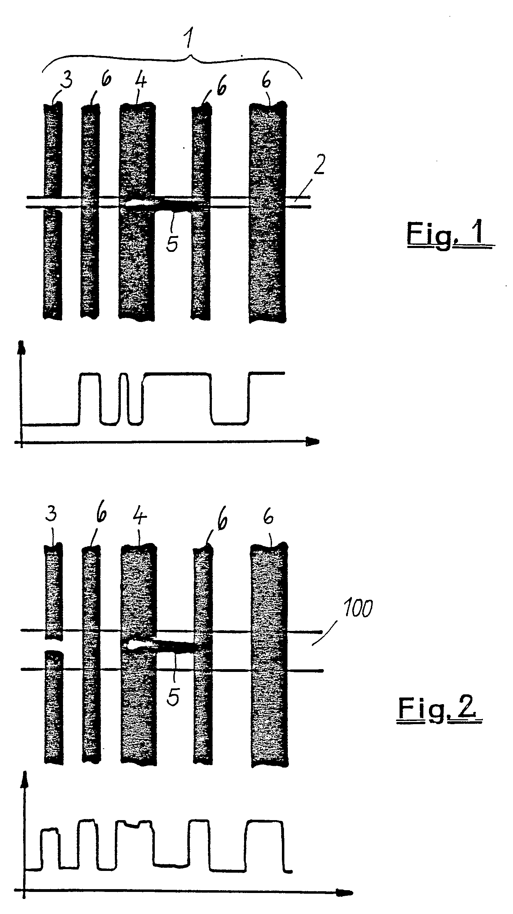

In order to better understand what happens during the reading of an imperfect bar code by a CCD linear image sensor, reference is made to the accompanying figure 1 in which 1 indicates a bar code and 2 indicates the band along which the sensor reads. The reference numerals 3, 4 and 5 respectively indicate an interrupted bar, a bar including a blank and a smudge line which joins the bar 4 to an adjacent complete bar 6.

Reading such an imperfect code with a conventional reading device leads to process an electric signal which is not representative of the real dimensions of the code. In fact, the presence of an interruption in the bar 3 produces no signal, while the blank in the bar 4 generates a gap in the signal related to said bar 4. The smudge line 5 furthermore produces a signal corresponding to a bar equal in width to the sum of the widths of the bars 4 and 6 and of the interspace comprised between said bars. The reading of the code is therefore completely wrong.

The technical aim of the present invention is to provide an optical device which eliminates the disadvantageous effects produced by printing imperfections in reading bar codes by means of CCD linear image sensors.

Within the scope of this aim, an object of the present invention is to provide an optical device which is simple in construction, so as to not economically affect the overall cost of the reading device.

This aim and this object are achieved by an optical device for correcting printing imperfections in reading bar codes by means of a linear image sensor, characterized in that a bar is arranged on the sensor, said bar having a face fronting said sensor, said face being planar and glossy, said bar having an opposite face convex and glossy, said bar being made of translucent material.

Further characteristics and advantages of the present invention will become apparent from the following description of a preferred embodiment, illustrated only by way of non-limitative example in the accompanying drawings, wherein:

figure 2 is a view of an imperfect bar code and the diagram of the signal read with an optical device according to the invention;

figure 3 shows a plan, lateral and sectional views of a bar according to the invention;

figure 4 is an enlarged-scale isometric view of a linear image sensor provided with the bar of figure 3; and

figure 5 is a sectional view of the linear sensor of figure 4.

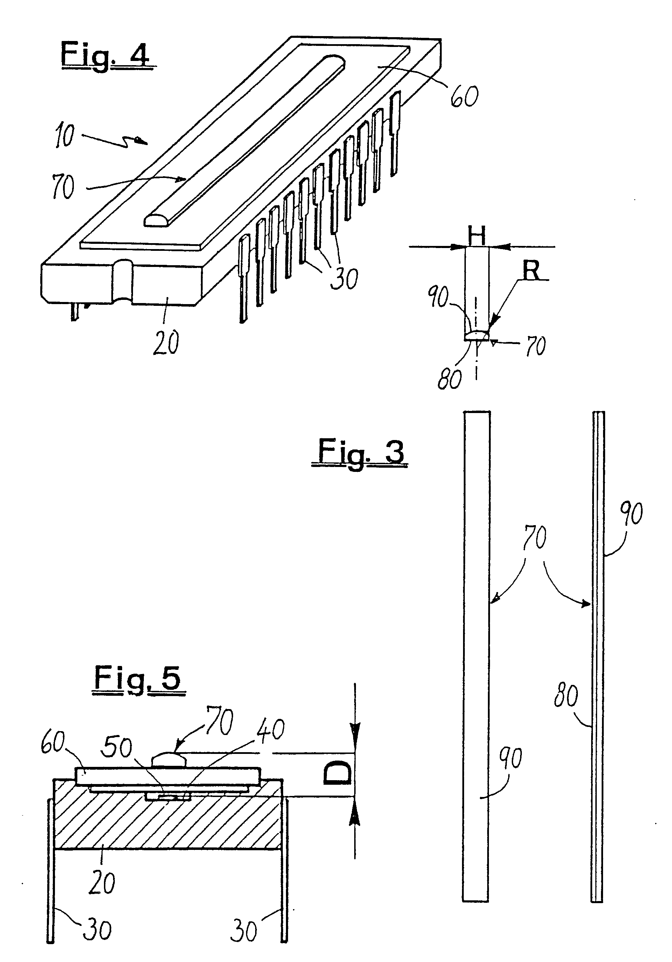

With reference to figures 3-5, the reference numeral 10 indicates a linear image sensor, for example of the type manufactured by the Japanese company OKI and identified by the code OPA 2048 CA. Said sensor is composed of a rectangular prismatic base 20; its connecting pins 30 extend from its longitudinal sides. The light-sensitive elements 50 are arranged on the upper face of the base 20 in a groove 40 and are mutually aligned in a straight line and protected by a glass plate 60 partially recessed in a seat of the base 20.

A bar 70 in translucent material, for example glass, is arranged on the surface of the plate 60 in a position opposite to the light-sensitive elements 50.

The bar 70 (see figure 3) has a planar face 80 for contact on the surface of the plate 60 and a cylindrically cambered convex face 90.

The bar 70 is fixed on the plate 60 by means of adapted translucent adhesives. Given a width H of the bar corresponding to the apparent width to be given to the light-sensitive linear surface, the radius of curvature of the cylindrical face is appropriately calculated according to the formula $R \geq D \times (n - 1)$, where D is the minimum distance which is physically obtainable between the top of the cylindrical face and the light-sensitive surface of the sensor and n is the refractive index of the material used to manufacture the bar.

By applying the bar 70, the apparent width of the photo-elements 50 is increased. In other words, the band read by the device is widened, as indicated by 100 in figure 2, forming signals which, though they do not exactly correspond to those related to the width of the bars and of the interspaces, are however suitable to be processed for a perfect reading. In fact, as can be seen in fig. 2, the interruption of the bar 3 produces only a slight reduction of the signal, and so does the blank in the bar 4, while the influence of the smudge line 5 joining the bars 4 and 6 is irrelevant in forming the bottom level of the signal, which is increased by a fully negligible amount.

As is apparent, the greatest source of reading errors caused by imperfections in the printing of the bar code is thus corrected. In the practical embodiment of the invention, numerous modifications and variations are possible, according to the characteristics of the linear sensor. The bar 70 can furthermore be made of transparent plastic material instead of glass. In a further embodiment of the invention the bar is manufactured monolithically with the plate protecting the light-sensitive elements.

Modifications and variations of the present invention are possible in the light of the above teachings. It is therefore to be understood that within the scope of the appended claims the invention may be practiced, otherwise than as specifically described.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Optical device for correcting printing imperfections in reading bar codes (1) by means of a linear image sensor (10), characterized in that a bar (70) is arranged on the sensor (10), said bar having a face (80) fronting said sensor (10), said face (80) being planar and glossy, said bar having an opposite face (90) convex and glossy, said bar (70) being made of translucent material.

2. Optical device according to claim 1, characterized in that given a width H of the bar (70) corresponding to the apparent width to be given to the light-sensitive linear surface, the convex face (90) has a cylindrical surface with a radius $R \geq D \times (n - 1)$, where D is the minimum distance obtainable between the top of the cylindrical surface (90) and the light-sensitive surface (50) of the linear sensor (10) and n is the refractive index of the material used to manufacture the bar (70).

3. Device according to claim 1 or 2, characterized in that said bar (70) is provided monolithically with the plate (60) protecting the light-sensitive elements (50) of the linear sensor (10).

4. Device, according to claim 1, characterized in that said translucent material is glass.

5. Device, according to claim 1, characterized in that said translucent material is plastics.

Fig. 1

Fig. 2

## Fig. 4

10

70

20

60

30

H

90

R

70

80

## Fig. 3

70

90

80

90

## Fig. 5

60

50

70

40

20

30

30

D